(19) Europäisches Patentamt
European Patent Office
Office européen des brevets

(11) **EP 1 559 058 B1**

(12) **FASCICULE DE BREVET EUROPEEN**

(45) Date de publication et mention de la délivrance du brevet:
**03.01.2018 Bulletin 2018/01**

(21) Numéro de dépôt: **03767883.6**

(22) Date de dépôt: **03.11.2003**

(51) Int Cl.:
***G06K 9/00*** *(2006.01)*

(86) Numéro de dépôt international:
**PCT/FR2003/003271**

(87) Numéro de publication internationale:
**WO 2004/044826 (27.05.2004 Gazette 2004/22)**

(54) **PROCEDE D'IDENTIFICATION D'UNE PERSONNE PAR RECONNAISSANCE D'EMPREINTE DIGITALE**

VERFAHREN ZUR IDENTIFIZIERUNG EINES MENSCHEN MITTELS FINGERABDRUCKERKENNUNG

METHOD FOR IDENTIFICATION OF A PERSON BY RECOGNITION OF A DIGITAL FINGERPRINT

(84) Etats contractants désignés:
**AT BE BG CH CY CZ DE DK EE ES FI FR GB GR HU IE IT LI LU MC NL PT RO SE SI SK TR**

(30) Priorité: **08.11.2002 FR 0214030**

(43) Date de publication de la demande:
**03.08.2005 Bulletin 2005/31**

(73) Titulaire: **MORPHO**
**92130 Issy-Les-Moulineaux (FR)**

(72) Inventeurs:
- **COVA, Jean-François**
  **F-75019 Paris (FR)**
- **CHEVALIER, Frédéric**
  **F-78480 Verneuil sur Seine (FR)**

(74) Mandataire: **Cabinet Plasseraud**
**66, rue de la Chaussée d'Antin**
**75440 Paris Cedex 09 (FR)**

(56) Documents cités:
EP-A- 0 617 919    US-A1- 2002 126 883
US-B1- 6 324 297

**Description**

La présente invention concerne d'une façon générale le domaine de l'identification d'une personne par reconnaissance d'empreinte digitale et elle concerne plus spécifiquement des perfectionnements apportés aux procédés - automatisés - d'identification d'une personne par reconnaissance d'empreinte digitale, consistant à :

- réaliser une photographie numérique donnant une image numérisée d'une empreinte digitale ou partie d'empreinte digitale présente sur une surface d'un objet,
- analyser ladite image numérisée de l'empreinte digitale,
- y détecter des points caractéristiques,
- échanger les informations numériques des points caractéristiques détectés avec une banque d'informations détenant en mémoire des informations numériques des points caractéristiques d'une multiplicité d'empreintes digitales, lesdites informations numériques mémorisées correspondant à des images planes de la multiplicité d'empreintes digitales,
- comparer les informations numériques des susdits points caractéristiques détectés avec les informations numériques tenues en mémoire dans la banque d'informations, et
- identifier une personne possédant ladite empreinte digitale comme résultat de la comparaison précédente.

Dans ce qui suit, l'invention est discutée et exposée avec référence aux empreintes digitales, c'est-à-dire aux reliefs cutanés présents sur les faces inférieures des doigts (en général les doigts des mains).

Toutefois il est entendu que l'invention s'applique non seulement aux empreintes digitales (doigts des mains ou doigts des pieds), mais aussi à tous autres reliefs cutanés présents sur d'autres parties du corps (par exemple paumes des mains, plantes des pieds,...).

Il est connu notamment par le document EP 0617 919 un appareil comportant un dispositif de support non plan pour apposer la main de la personne que l'on souhaite identifier. L'appareil comporte des moyens informatiques permettant de corriger la déformation liée à l'utilisation d'un dispositif de support non plan.

Le document US 2002/0126883 divulgue un procédé pour calculer la distance moyenne entre les creux et les bosses d'un doigt et modifier cette distance lorsque celle-ci est trop éloignée de la valeur moyenne calculée pour un doigt.

Le document US 6,324,297 divulgue un procédé informatique d'assistance à un opérateur pour extraire les points d'extrémité et les bifurcations d'une image d'une empreinte. Le rocédé comportant une étape de rotation de l'image d'un angle permettant d'obtenir des lignes verticales et une compression de l'image d'un facteur égal au cosinus de l'angle de rotation.

De tels procédés sont utilisés pour une identification automatisée d'une personne à partir d'une empreinte digitale détecté sur une surface d'un objet.

Lorsque ladite surface est plane ou approximativement plane (par exemple surface courbe à grand rayon de courbure), l'image numérisée de l'empreinte digitale fournie par photographie numérique restitue de façon sensiblement correcte et complète la topologie des points caractéristiques de ladite empreinte et le processus d'identification exposé ci-dessus peut se dérouler dans des conditions fiables.

Toutefois, dans de nombreux cas, des empreintes digitales peuvent être détectées sur des surfaces courbes de relativement faible rayon de courbure (par exemple manche d'outil, douille de munition, canon d'arme à feu, poignée de porte, etc....). Dans ce cas, la partie centrale - située sur la partie de la surface qui est la plus proche de l'objectif photographique et qui s'étend approximativement transversalement à l'axe de celui-ci de l'empreinte digitale apparaîtra de façon sensiblement correcte sur l'image numérisée ; mais les bords de l'empreinte digitale-situés sur les parties de la surface qui sont plus éloignées de l'objectif photographié et qui sont peu inclinées, voire parallèles à l'axe de celui-ci-apparaîtront dans une perspective très marquée (effet de tassement) et la topologie des points caractéristiques est fortement faussée, voire les points caractéristiques ne sont plus décelables. Dans ce cas, la détection des points caractéristiques doit se limiter à la zone centrale de l'image de l'empreinte, ce qui altère fortement la fiabilité du processus d'identification.

Pour fixer les idées, on peut considérer l'exemple suivant. Une image rectangulaire curviligne sur une surface cylindrique de révolution se projette sur une surface plane en une image rectangulaire plane. La distorsion de l'image rectangulaire plane par rapport à l'image rectangulaire curviligne dépend de la position angulaire des zones de l'image sur le cylindre. Dans l'hypothèse la plus simple d'une projection droite :

- la génératrice du cylindre parallèle au plan et la plus proche de celui-ci (position angulaire 0°) se projette sur le plan sans distorsion ;
- la zone courbe du cylindre s'étendant sur la plage angulaire 0 - 45° se projette sur la surface plane avec une distorsion d'environ 10 % ;
- la zone courbe du cylindre s'étendant sur la plage angulaire 0 - 65° se projette sur la surface plane avec une distorsion d'environ 20 % ;

- la zone courbe du cylindre s'étendant sur la plage angulaire 0 - 85° se projette sur la surface plane avec une distorsion d'environ 33 %.

On soulignera qu'il s'agit là de la distorsion globale calculée à partir du rapport entre la dimension de l'arc de cercle et la dimension de sa projection orthogonale sur un plan. Mais localement la distorsion peut être beaucoup plus importante.

On notera également qu'une image projetée sur un plan (photographie) d'une empreinte digitale apposée sur une surface courbe est difficilement exploitable de façon fiable si l'objet courbe sur lequel se trouve l'empreinte digitale originale présente un diamètre inférieur à 3,20 cm.

Par contre, en présence d'une distorsion de l'image projetée à plat inférieure à 10 %, les appareils de reconnaissance automatique d'empreinte digitale peuvent fonctionner correctement.

Considérée sous un autre angle, la transformation de l'empreinte digitale originale apposée sur la surface courbe en une image numérique plane se traduit par une perte de résolution sur ladite image plane en fonction de l'éloignement latéral par rapport à la zone centrale non distordue. Toujours en considérant l'exemple de la surface cylindrique de révolution, la variation de la résolution sur l'image plane en fonction de la position angulaire sur la surface cylindrique est la suivante :

1000 dpi à 0° (zone centrale)
700 dpi à 45°
500 dpi à 60°
173 dpi à 80°
0 dpi à 90°

Il existe donc une demande pressante, de la part des utilisateurs de dispositifs de reconnaissance automatisée d'empreinte digitale, pour que cette reconnaissance automatisée demeure valide et exploitable même en présence d'empreintes digitales apposées sur des surfaces courbes, de manière telle qu'au moins la plus grande partie des points caractéristiques des empreintes soient détectables et utilisables aux fins de reconnaissance.

A ces fins, l'invention propose un procédé d'identification tel que mentionné au préambule qui se caractérise, selon l'invention,

en ce que, lorsque l'empreinte digitale se trouve sur une surface courbe, on transforme par projection plane, au moyen d'un traitement algorithmique, ladite image numérisée en une image numérisée corrigée avec un niveau de distorsion inférieur à un seuil prédéterminé, ladite image corrigée représentant dans un plan les points caractéristiques de ladite empreinte digitale,

en ce qu'on détecte lesdits points caractéristiques dans ladite image corrigée,

et en ce qu'on échange les informations numériques courantes desdits points caractéristiques avec la susdite banque d'informations et on les compare avec les informations numériques mémorisées dans celle-ci.

Grâce à ce procédé, l'image numérisée plane initiale de l'empreinte digitale, qui n'était que partiellement exploitable et conduisait souvent à des résultats non satisfaisants (nombre insuffisant de points caractéristiques visibles, distances distordues entre les points caractéristiques conduisant à des topologies erronées entraînant des identifications erronées ou impossibles), est transformée en une image numérisée plane corrigée sur laquelle la topologie des points caractéristiques de l'empreinte est reconstituée avec une exactitude très supérieure à celle de l'image initiale. L'exactitude de cette topologie sur l'image reconstituée est d'autant meilleure et se rapproche d'autant plus de la topologie exacte que la géométrie de la surface courbe a été prise en compte de façon précise par les moyens de traitement algorithmique.

C'est ainsi notamment que les meilleurs résultats sont obtenus lorsque la surface courbe est une surface géométrique simple : cylindrique de révolution , conique ou tronconique de révolution, éventuellement sphérique, et lorsque des points ou génératrices diamétralement opposés sont visibles sur l'image initiale (demi-cylindre, demi-cône, demi-sphère visible en projection sur l'image initiale).

Dans le cas où l'empreinte digitale est apposée sur une surface courbe complexe, on tente de décomposer celle-ci en morceaux de surface de formes géométriques simples accolés et l'on traite individuellement chaque morceau de surface avec sa portion d'empreinte, ce qui conduit finalement à une image plane corrigée formée d'une mosaïque de morceaux d'image plane corrigée qui se juxtaposent de façon plus ou moins précise selon la complexité du découpage, mais qui autorise la mise en oeuvre du processus de reconnaissance automatisé, alors que l'image plane initiale n'aurait pas pu être traitée correctement.

Le procédé conforme à l'invention consiste donc à "dérouler" à plat l'image initiale de l'empreinte digitale en respectant les distances des diverses zones ou points par rapport à une zone de référence non distordue ; autrement dit on reporte sur l'image plane corrigée les distances planes égales aux distances curvilignes respectives sur la surface où l'empreinte est apposée. Seules les zones de bord (correspondant aux bords de la surface courbe) ne peuvent pas être reconstituées de façon efficace en raison du tassement des formes sous l'effet de la perspective. Toutefois, ces zones de bord non reconstructibles demeurent peu importantes et il est estimé qu'environ 83 % de l'image plane de l'empreinte pouvait être corrigée.

L'invention sera mieux comprise à la lecture de la description détaillée qui suit faite en référence aux dessins annexés sur lesquels :

- les figures 1A et 1B sont des images planes d'une empreinte digitale apposée sur une surface cylindrique de révolution, ces images étant respectivement non corrigée et corrigée par mise en oeuvre du procédé de l'invention ;
- la figure 2 est un schéma illustrant le mode de correction des images mis en oeuvre conformément à l'invention ;
- la figure 3 est un schéma très simplifié illustrant le procédé d'identification par reconnaissance d'empreinte digitale conformément à l'invention ; et
- les figures 4A et 4B sont des images planes d'une empreinte digitale respectivement avant et après traitement selon l'invention, la surface étant de forme complexe.

L'invention vise à traiter le cas d'empreintes digitales détectées sur une surface courbe de manière à rendre ces images exploitables par des dispositifs de reconnaissance ou identification automatisée qui traitent des topologies planes de points caractéristiques d'empreintes digitales.

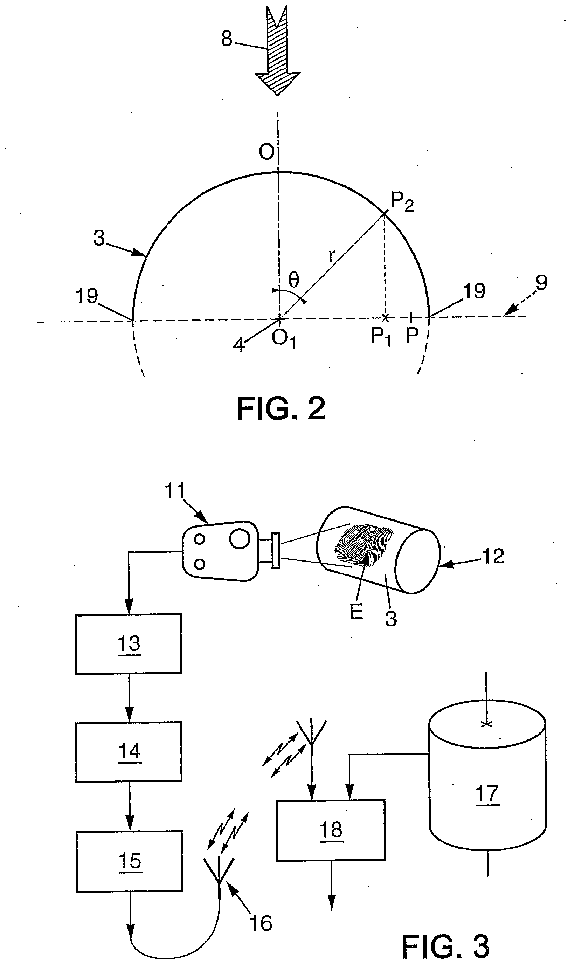

On commence par établir (en 11 à la figure 3) une photographie numérique de l'empreinte digitale ou partie d'empreinte digitale E présente sur une surface courbe 12. Cette photographie numérique peut être établie par tout moyen connu, soit directement, soit par numérisation d'une photographie standard. Pour l'obtention de résultats de qualité optimale, il est souhaitable que la photographie soit prise en réduisant au minimum les effets perspectifs : par exemple, dans le cas de surfaces cylindriques ou coniques de révolution, l'axe de l'objectif est si possible perpendiculaire à l'axe de la surface et dirigé sensiblement sur le centre de l'empreinte ou partie d'empreinte.

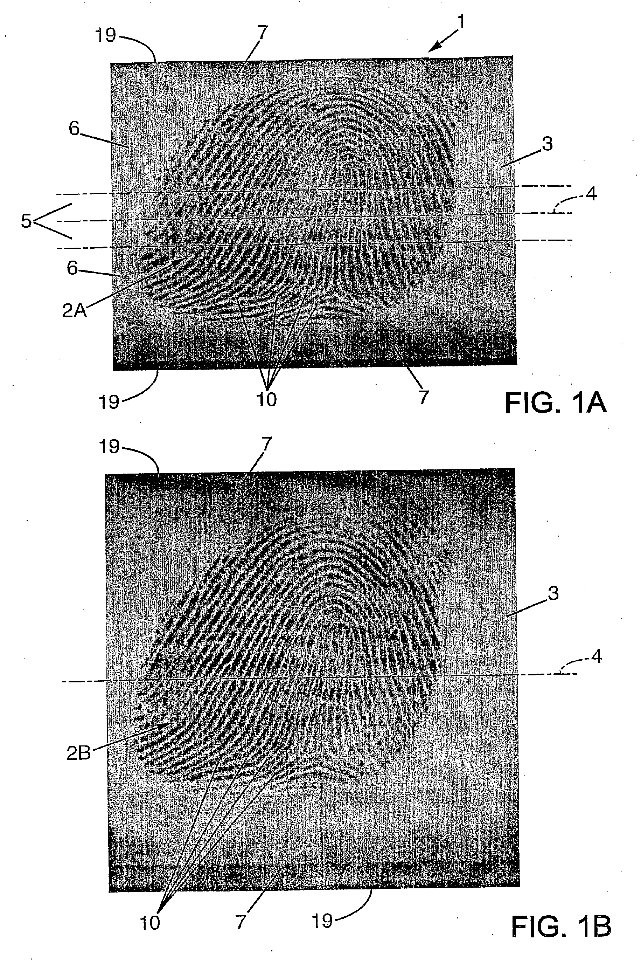

Dans l'exemple illustré à la figure 1A, on a représenté une photographie numérique 1 montrant une image numérisée 2A d'une empreinte digitale E présente sur une surface courbe 3 d'un objet 12 (figure 3).

Le domaine privilégié d'application de l'invention concerne la police : les objets sur lesquels des empreintes digitales sont décelées (en dehors des meubles, murs, portes, ... à surfaces planes pour lesquels le processus d'identification automatisée est effectué dans des conditions habituelles) peuvent fréquemment être des surfaces courbes à géométrie simple (cylindre, cône ou tronc de cône, sphère). Notamment des empreintes peuvent être décelées sur des canons d'armes à feu ou sur des douilles de munitions d'armes à feu qui ont des surfaces cylindriques de révolution, sur des poignées de portes ou de portières de véhicules qui ont des surfaces ou portions de surface cylindriques de révolution ou coniques de révolution, etc. .... A titre d'exemple, la surface courbe 3 montrée à la figure 1A est une surface cylindrique de révolution.

L'appareil de prise de vue ayant été disposé dans les conditions précitées, on obtient en 13 (figure 3) l'image numérisée 2A de l'empreinte digitale qui ne présente aucune distorsion notable sur la génératrice 4 confondue avec l'axe du cylindre, qui présente une distorsion limitée dans les zones 5 situées de part et d'autre de la génératrice 4 (zones angulaires de 0 à environ 45° dans lesquelles la distorsion reste inférieure à environ 10 %), et qui enfin présente une distorsion importante, croissante vers les bords, dans les zones extrêmes 6, avec un tassement des formes les rendant illisibles sur les bords 7 visibles de la surface 3 (figure 1A). Dans cet exemple, les bords visibles de la surface 3 sont limités par deux génératrices 19 diamétralement opposées.

Sur l'image numérique ainsi obtenue, on met en oeuvre le procédé de l'invention (étape 14 à la figure 3) qui consiste à transformer par projection plane, au moyen d'un traitement algorithmique, ladite image numérisée 2A en une image numérisée corrigée avec un niveau de distorsion inférieur à un seuil prédéterminé, ladite image corrigée représentant dans un plan les points caractéristiques de ladite empreinte digitale. Autrement dit, on "déroule" l'image initiale courbe sur un plan pour obtenir une image finale "déroulée".

Le traitement algorithmique se déroule de la façon suivante, exposée en référence à la figure 2.

A la figure 2 est représenté la section transversale de la surface 3 (cylindrique de révolution par exemple) dans sa seule partie apparaissant sur la photographie (axe de la prise de vue est schématisé par la flèche 8). L'image numérisée 2A de l'empreinte digitale correspond à la projection de l'empreinte enroulée sur la surface courbe 3 sur le plan 9, plan diamétral perpendiculaire à l'axe 8 de la prise de vue.

Dans cette projection, le milieu O de la surface courbe 3 se projette en $O_1$ milieu du diamètre et correspondant à l'axe 4 de la figure 1A. La projection de O en $O_1$ s'effectue sans distorsion.

Tout point $P_2$ de la surface courbe 3 (non confondu avec le milieu O) se projette en $P_1$ sur le diamètre.

Si on désigne par r le rayon de la surface cylindrique 3 et par $\theta$ l'angle du segment $O_1P_2$ avec le segment $OO_1$, la longueur du segment curviligne $OP_2$ sur la surface 3 est :

$$OP_2 = r\theta \text{ ($\theta$ en radians)}$$

et supérieure à la longueur de sa projection droite (segment linéaire $O_1P_1$) sur le plan 9 qui est :

$$O_1P_1 = r \cos (\pi/2 - \theta) \text{ ($\theta$ en degrés)}$$

soit:

$$O_1P_1 = r.\cos(\pi/2 - OP_2/r).$$

Il est donc possible d'envisager un traitement algorithmique qui établisse une association entre tout point $P_2$ de l'image numérisée initiale 2A et un point P du plan 9 tel que :

$$\text{longueur } OP_2 = \text{longueur segment } O_1P.$$

En pratique, le traitement algorithmique est effectué à l'envers, de manière à retrouver, pour tout point P du plan 9, le point $P_2$ correspondant sur l'image numérisée initiale 2A. Ainsi, de façon plus précise, le traitement algorithmique détermine, pour tout point P du plan 9, un point $P_1$ tel que

$$O_1P_1 = r.\cos(\pi/2 - O_1P/r).$$

Le point $P_1$ ainsi trouvé est la projection d'un point $P_2$ de la surface cylindrique 3, qui satisfait la relation requise longueur arc $OP_2$ = longueur segment $O_1P$.

L'exécution de ce traitement algorithmique impose de disposer de la valeur du rayon r de la surface courbe 3 et de la position du point $O_1$.

Ces informations peuvent être déterminées de façon simple dans le cas, envisagé aux figures 1A et 2, où la surface courbe 3 est de forme simple et où deux génératrices diamétralement opposées sont visibles sur l'image numérisée (l'image présente alors un demi-cylindre comme visible à la figure 1A). A cette fin, on peut repérer, sur l'image numérisée, deux points sur chacune des deux génératrices diamétralement opposées (bords visibles de la surface). Le traitement algorithmique est alors en mesure de déterminer le diamètre de la surface et de positionner son axe, ce qui rend possible le traitement algorithmique de chaque point de l'image numérisée.

Le même processus serait applicable dans le cas d'une surface conique de révolution.

Dans le cas d'une surface cylindrique de révolution, la connaissance de trois points (deux sur une génératrice et un sur la génératrice diamétralement opposée), ou bien encore la connaissance d'un point d'une génératrice et de la position de l'axe de la surface, ou bien encore la connaissance de deux points d'une génératrice et d'un point de l'axe peuvent suffire pour autoriser le traitement algorithmique. Dans le cas d'une surface conique ou tronconique de révolution, la connaissance de quatre points (deux points sur chacune de deux génératrices diamétralement opposées) est nécessaire.

On notera également que le traitement algorithmique des points des bords de l'image numérisée initiale permet certes d'obtenir des points corrigés en relation avec les points visibles sur l'image initiale, mais ne permet pas de reconstituer ce qui n'est pas visible en raison de l'écrasement des formes dû à l'effet de perspective. En particulier des points caractéristiques présents dans ces zones de bord ne pourront pas être décelés et n'apparaîtront donc pas sur l'image corrigée. Compte tenu du peu d'informations susceptibles d'être recueillies sur les bords en raison des déformations dues à l'effet de perspective trop important, on peut convenir de ne pas traiter les zones de bord, ce qui permet d'accélérer la formation de l'image corrigée.

Un traitement algorithmique portant sur environ 83 % de l'image initiale semble devoir être satisfaisant.

Ainsi effectué, le traitement algorithmique mené sur l'image numérisée initiale 2A de l'empreinte digitale conduit à une image numérisée corrigée ("déroulée") 2B comme visible à la figure 1B. Cette image corrigée expose une topologie des points caractéristiques 10 de l'empreinte qui ne présente plus les erreurs dues à la projection droite d'une image tridimensionnelle sur une surface plane. De ce fait les points caractéristiques se présentent à leurs emplacements relatifs approximativement exacts et il devient possible de les analyser sur l'ensemble de l'image.

**EP 1 559 058 B1**

Ainsi, c'est à partir de l'image numérisée corrigée de l'empreinte digitale qu'est mené le processus d'identification automatisé et c'est cette image numérisée corrigée de l'empreinte digitale qui est analysée (en 15, figure 3) pour y détecter les points caractéristiques disposés dans une topologie plane approximativement exacte.

Ce sont ensuite lés informations numériques courantes desdits points caractéristiques disposés dans une topologie plane qui sont échangées (en 16, figure 3) avec une banque d'informations (17, figure 3) détenant en mémoire des informations numériques des points caractéristiques d'une multiplicité d'empreintes digitales, lesdites informations numériques mémorisées correspondant à des images planes de la multiplicité d'empreintes digitales.

Il devient alors possible d'effectuer une comparaison fiable des informations numériques des susdits points caractéristiques détectés avec les informations numériques tenues en mémoire dans la banque d'informations afin d'essayer d'identifier une personne possédant ladite empreinte digitale laissée sur la surface courbe (18, figure 3).

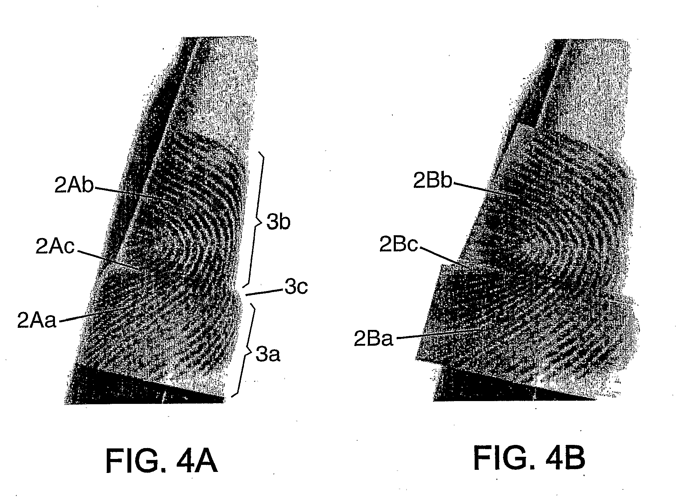

La précision de la reconstruction de la topologie plane des points caractéristiques de l'empreinte digitale laissée sur une surface courbe repose essentiellement sur les conditions de prise de la photographie de l'empreinte, d'une part, et sur la reconstitution de la géométrie de la surface, d'autre part. La reconstitution de la géométrie de la surface implique de reconstituer le plus fidèlement possible la forme de la surface, ce qui peut être obtenu aisément dans le cas de formes simples (cylindre ou cône de révolution, sphère), mais est plus malaisé à obtenir dans le cas de formes moins simples (cylindre ou cône non de révolution, par exemple) ou dans le cas de formes complexes : une décomposition de la forme complexe en formes élémentaires simples est alors nécessaire et l'image corrigée finale est alors constituée d'une mosaïque d'images élémentaires corrigées montrant respectivement des parties de l'empreinte digitale. Les figures 4A et 4B illustrent un tel processus. Comme visible à la figure 4A, l'empreinte digitale 2A est photographiée sur une pièce de forme curviligne complexe qui, dans cet exemple, se décompose en une surface 3a cylindrique de révolution comportant une partie 2Aa de l'image de l'empreinte digitale, une surface 3b tronconique de révolution comportant une partie 2Ab de l'image de l'empreinte digitale, et une surface 3c de liaison entre les deux précédentes en forme d'épaulement annulaire arrondi et comportant une partie 2Ac de l'image de l'empreinte digitale. On traite chaque surface indépendamment l'une de l'autre en mettant en oeuvre, pour chacune d'elles, les dispositions précédemment exposées. On obtient finalement (figure 4B) trois images corrigées juxtaposées respectivement 2Ba, 2Bb et 2Bc.

La détermination exacte du rayon de la surface doit également être précise car c'est elle qui conditionne le "déroulage" de l'image. Pour ce faire, il est nécessaire que le repérage des points matérialisant la ou les génératrices et/ou l'axe de la surface sur l'image initiale soit aussi précis que possible.

De ce point de vue, les meilleures conditions sont rencontrées lorsque la surface courbe apparaît sur la photographie sous une forme diamétralement coupée, avec ses bords 19 délimités par deux génératrices diamétralement opposées.

Dans le cas où la surface courbe n'apparaît pas sous forme diamétralement coupée, on peut envisager de donner manuellement, aux moyens de traitement algorithmique, des informations sur la forme et le rayon de la surface, par exemple en mettant en oeuvre un logiciel de dessin numérique permettant de dessiner, sur l'image initiale, un tronçon d'arc selon la section de la surface courbe à partir duquel les moyens de traitement algorithmique seraient en mesure de déterminer le rayon de courbure.

**Revendications**

1. Procédé automatisé d'identification d'une personne par reconnaissance d'empreinte digitale, consistant à :

    - réaliser une photographie numérique (en 11) donnant une image numérisée (13) d'une empreinte digitale ou partie d'empreinte digitale (E) présente sur une surface (3) d'un objet (12),
    - analyser (15) ladite image numérisée de l'empreinte digitale,
    - y détecter des points caractéristiques,
    - échanger (16) les informations numériques des points caractéristiques détectés avec une banque d'informations (17) détenant en mémoire des informations numériques des points caractéristiques d'une multiplicité d'empreintes digitales, lesdites informations numériques mémorisées correspondant à des images planes de la multiplicité d'empreintes digitales,
    - comparer (18) les informations numériques des susdits points caractéristiques détectés avec les informations numériques tenues en mémoire dans la banque d'informations, et
    - identifier une personne possédant ladite empreinte digitale comme résultat de la comparaison précédente,

    **caractérisé en ce que**, lorsque l'empreinte digitale (E) se trouve sur une surface (3) courbe, le procédé comporte en outre les étapes suivantes :

    sélectionner un modèle préétabli de surface courbe semi-cylindrique ou semi-conique de révolution ayant une forme correspondant à ou voisine de la forme de la surface courbe ou d'une portion de la surface courbe sur laquelle est apposée l'empreinte digitale,

- dans le cas où la surface courbe apparaît sur l'image numérisée sous forme semi-cylindrique ou semi-conique de révolution, fournir à des moyens de traitement algorithmique des informations sur les positions respectives des deux génératrices diamétralement opposées visibles sur l'image numérisée, ce grâce à quoi les moyens de traitement algorithmique en déduisent les caractéristiques géométriques de la surface courbe, et
- transformer par projection plane, à l'aide desdits moyens de traitement algorithmique, ladite image numérisée en une image numérisée corrigée avec un niveau de distorsion inférieur à un seuil prédéterminé, ladite image corrigée représentant dans un plan les points caractéristiques de ladite empreinte digitale,
- utiliser ladite image corrigée plane pour la détection des points caractéristiques de l'empreinte digitale et l'identification de la personne.

2. Procédé selon la revendication 1, **caractérisé en ce que** les moyens de traitement algorithmique associent, à chaque point de l'image numérisée initiale de l'empreinte digitale enroulée sur la surface courbe, un point situé sur un plan de projection tel que la distance linéaire dudit point du plan par rapport à la projection de l'axe de ladite surface soit égale à la distance curviligne dudit point de l'image initiale par rapport à la projection dudit axe sur ladite surface.

3. Procédé selon la revendication 2, **caractérisé en ce qu'**à tout point (P) du plan de projection, les moyens de traitement algorithmique déterminent un point projeté ($P_1$) tel que, $O_1$ étant la projection de l'axe de la surface sur ledit plan,

$$O_1P_1 = r.cos(\pi/2 - O_1P/r)$$

r étant le rayon estimé de la surface courbe, puis associent au point projeté ($P_1$) du plan un point ($P_2$) de la surface courbe dont le point projeté ($P_1$) est la projection sur le plan.

4. Procédé selon l'une quelconque des revendications 1 à 3, **caractérisé en ce que**, dans le cas où l'empreinte digitale (E) se trouve apposée sur une surface de forme complexe, le procédé comporte en outre les étapes suivantes :

- décomposer l'image (3) de ladite surface de forme complexe en images partielles (3a, 3b, 3c) de surfaces de formes simples,
- traiter chaque image partielle (2Aa, 2Ab, 2Ac) en relation avec la forme de la surface respective pour obtenir des images partielles corrigées (2Ba, 2Bb, 2Bc), et
- juxtaposer les images partielles corrigées de façon à obtenir une image corrigée en mosaïque de l'empreinte digitale.

5. Procédé selon l'une quelconque des revendications 1 à 4, dans lequel lesdites caractéristiques géométriques comprennent le rayon et la position de la projection de la prise de vue.

6. Procédé selon la revendication 1, qui comprend en outre les étapes suivantes :

- détecter les points caractéristiques dans ladite image corrigée ;
- échanger des informations numériques courantes desdits points caractéristiques avec les informations numériques mémorisées dans la susdite banque d'informations (17).

## Patentansprüche

1. Automatisiertes Verfahren zum Identifizieren einer Person durch Erkennen eines Fingerabdrucks, umfassend:

- das Erstellen einer digitalen Fotografie (in 11) zum Erzeugen eines Digitalbilds (13) eines Fingerabdrucks oder eines Teils eines Fingerabdrucks (E), der auf einer Oberfläche (3) eines Objekts (12) vorhanden ist,
- das Analysieren (15) des Digitalbilds des Fingerabdrucks,

- das Erfassen von charakteristischen Punkten in dem Digitalbild,
- das Abgleichen (16) der digitalen Informationen der erfassten charakteristischen Punkte mit einer Datenbank (17), in der digitale Informationen der charakteristischen Punkte einer Vielzahl von Fingerabdrücken gespeichert sind, wobei die gespeicherten digitalen Informationen ebenen Bildern der Vielzahl von Fingerabdrücken entsprechen,
- das Vergleichen (18) der digitalen Informationen der erfassten charakteristischen Punkte mit den in der Datenbank gespeicherten digitalen Informationen, und
- das Identifizieren einer Person, die den Fingerabdruck aufweist, als Ergebnis des vorhergehenden Vergleichs,

**dadurch gekennzeichnet, dass**, wenn sich der Fingerabdruck (E) auf einer gekrümmten Fläche (3) befindet, das Verfahren ferner die folgenden Schritte umfasst:

- das Auswählen eines voreingestellten Modells einer halbzylindrisch oder halbkonisch gekrümmten Rotationsfläche, die eine Form aufweist, die der Form der gekrümmten Fläche oder eines Teils der gekrümmten Fläche, auf der sich der Fingerabdruck befindet, entspricht oder nahe kommt,
- wenn die gekrümmte Fläche auf dem Digitalbild in halbzylindrischer oder halbkonischer Rotationsform erscheint, das Bereitstellen von Informationen über die entsprechenden Positionen der zwei auf dem Digitalbild sichtbaren diametral gegenüberliegenden Mantellinien ein Mittel zum algorithmischen Verarbeiten, wodurch die Mittel zum algorithmischen Verarbeiten daraus die geometrischen Merkmale der gekrümmten Fläche ableiten, und
- das Umwandeln des Digitalbilds in ein korrigiertes Digitalbild mit einem Verzerrungsniveau, das unter einer vorgegebenen Schwelle liegt, durch Projektion auf eine Ebene mit den Mitteln zum algorithmischen Verarbeiten, wobei das korrigierte Bild in einer Ebene die charakteristischen Punkte des Fingerabdrucks darstellt,
- das Verwenden des korrigierten ebenen Bilds zum Erfassen der charakteristischen Punkte des Fingerabdrucks und zum Identifizieren der Person.

2.  Verfahren nach Anspruch 1, **dadurch gekennzeichnet, dass** die Mittel zum algorithmischen Verarbeiten mit jedem Punkt des ursprünglichen Digitalbilds des auf der gekrümmten Fläche abgerollten Fingerabdrucks einen auf einer Projektionsebene angeordneten Punkt verknüpfen, so dass der lineare Abstand des Punkts der Ebene zur Projektion der Achse der Fläche gleich dem krummlinigen Abstand des Punkts des ursprünglichen Bilds zur Projektion der Achse auf der Fläche ist.

3.  Verfahren nach Anspruch 2, **dadurch gekennzeichnet, dass** zu jedem Punkt (P) der Projektionsebene die Mittel zum algorithmischen Verarbeiten einen projizierten Punkt (P$_1$) ermitteln, so dass, wenn O$_1$ die Projektion der Achse der Fläche der Ebene ist,

$$O_1P_1 = r.\cos (\pi/2 - O_1P/r)$$

wobei r der geschätzte Radius der gekrümmten Fläche ist, und anschließend mit dem projizierten Punkt (P$_1$) der Ebene einen Punkt (P$_2$) der gekrümmten Fläche verknüpfen, deren projizierter Punkt (P$_1$) die Projektion auf der Ebene ist.

4.  Verfahren nach einem der Ansprüche 1 bis 3, **dadurch gekennzeichnet, dass**, wenn sich der Fingerabdruck (E) auf einer Fläche mit komplexer Form befindet, das Verfahren ferner die folgenden Schritte umfasst:

- das Zerlegen des Bilds (3) der Fläche mit komplexer Form in Teilbilder (3a, 3b, 3c) von Flächen mit einfachen Formen,
- das Verarbeiten von jedem Teilbild (2Aa, 2Ab, 2Ac) in Beziehung mit der Form der jeweiligen Fläche, um korrigierte Teilbilder (2Ba, 2Bb, 2Bc) zu erhalten, und
- das Nebeneinanderlegen der korrigierten Teilbilder, um ein mosaikförmiges korrigiertes Bild des Fingerabdrucks zu erhalten.

5.  Verfahren nach einem der Ansprüche 1 bis 4, wobei die geometrischen Merkmale den Radius und die Position der Projektion der Aufnahme umfassen.

6.  Verfahren nach Anspruch 1, das ferner die folgenden Schritte umfasst:

- das Erfassen der charakteristischen Punkte im korrigierten Bild;
- das Abgleichen der aktuellen digitalen Informationen der charakteristischen Punkte mit den in der Datenbank (17) gespeicherten digitalen Informationen.

**Claims**

1. An automated method of identifying a person by fingerprint recognition, consisting in:

   - producing a digital photograph (at 11) giving a digitized image (13) of a fingerprint or part of a fingerprint (E) present on a surface (3) of an object (12);
   - analyzing (15) said digitized image of the fingerprint;
   - detecting characteristic points therein;
   - exchanging (16) the digital data of the detected characteristic points with a data bank (17) storing digital data of the characteristic points of a multiplicity of fingerprints in its memory, said stored digital data corresponding to plane images of the multiplicity of fingerprints;
   - comparing (18) the digital data of the abovementioned detected characteristic points with the digital data stored in the memory of the data bank; and
   - identifying a person possessing said fingerprint as a result of the above comparison, **characterized in that**, when the fingerprint (E) is on a curved surface (3), the method comprises further the following steps:
   - selecting a pre-established model of a curved semi-cylindrical or semi-conical surface of revolution having a shape corresponding to or close to the shape of the curved surface or of a portion of the curved surface, to which the fingerprint is fixed,
   - in the case where the curved surface appears into the digital image in the form of a semi-cylindrical or semi-conical of revolution, providing to algorithm processing means information about the respective positions of the two diametrically opposed generatrices visible in the digitized image whereby the algorithm processing means deduce the geometric characteristic of the curved surface,
   - projecting onto a plane said digital image to obtain a corrected digital image with a distortion level below a predetermined threshold, using said algorithm processing means, said corrected image showing in a plane the characteristic points of said fingerprint,
   - using said plane corrected image for detecting the characteristic points of the fingerprint and for identifying the person.

2. The method according to claim 1, **characterized in that** the algorithm processing means associate, with each point in the initial digitized image of the fingerprint rolled up on the curved surface, a point lying in a projection plane such that the linear distance of said point in the plane relative to the projection of the axis of said surface is equal to the curvilinear distance of said point in the initial image relative to the projection of said axis onto said surface.

3. The method according to claim 2, **characterized in that**, at any point (P) in the projection plane, the algorithm processing means determine a projected point ($P_1$) such that, $O_1$ being the projection of the axis of the surface onto said plane

$$O_1P_1 = r\cos(\pi/2 - O_1P/r)$$

   r being the estimated radius of the curved surface, and then associate with the projected point ($P_1$) in the plane a point ($P_2$) on the curved surface, the projected point ($P_1$) of which is the projection on the plane.

4. The method according to any of the claims 1 to 3, **characterized in that**, if the fingerprint (E) is found affixed to a surface of complex shape, the method further comprises the following steps:

   - break the image (3) of said surface of complex shape down into partial images (3a, 3b, 3c) of surfaces of simple shape,
   - process each partial image (2Aa, 2Ab, 2Ac) in relation to the shape of the respective surface in order to obtain corrected partial images (213a, 2Bb, 213c), and
   - juxtapose the corrected partial images so as to obtain a corrected image of the fingerprint as a mosaic.

**5.** The method according to any of the claims 1 to 4, wherein the geometric characteristics comprise the radius and the position of the projection of the shooting.

**6.** The method according to claim 1, which further comprises the following steps :

- detecting the characteristic points in the corrected image;
- exchange the current digital information of the characteristic points with the digital information stored in the data bank (17).

FIG. 1A

FIG. 1B

**FIG. 2**

**FIG. 3**

FIG. 4A

FIG. 4B

## RÉFÉRENCES CITÉES DANS LA DESCRIPTION

**Documents brevets cités dans la description**

- EP 0617919 A
- US 20020126883 A
- US 6324297 B